# EUROPEAN PATENT SPECIFICATION

(11) **EP 0 545 663 B1**
(45) Date of publication and mention of the grant of the patent: **30.08.1995**
(21) Application number: 92310931.8
(22) Date of filing: 01.12.1992
(51) Int. Cl.: C01B 7/07, C01B 31/08

(54) **Purification of hydrogen chloride containing hydrolyzable organic silicon compound**
Reinigung von hydrolisierbare Organosiliziumverbindungen enthaltendem Chlorwasserstoff
Purification de chlorure d'hydrogène contenant des composés organosiliciques hydrolysables

(30) Priority: 02.12.1991 JP 343895/91; 06.01.1992 JP 18292/92
(43) Date of publication of application: 09.06.1993
(73) Proprietor: SHIN-ETSU CHEMICAL CO., LTD., Chiyoda-ku Tokyo (JP)
(72) Inventor: Konno, Hiroki, Jouetsu-shi, Niigata-ken (JP); Yanagisawa, Toshiyuki, Jouetsu-shi, Niigata-ken (JP); Shimizu, Takaaki, Jouetsu-shi, Niigata-ken (JP)
(74) Representative: Stoner, Gerard Patrick

(56) References cited:
- EP-A- 0 058 116
- FR-A- 2 094 336
- GB-A- 177 180
- DATABASE WPIL Section Ch, Week 47, Derwent Publications Ltd., London, GB; Class E36, AN 88-334280 & JP-A-63 247 639
- CHEMICAL ABSTRACTS, vol. 109, no. 16, 9 October 1988, Columbus, Ohio, US; abstract no. 131600n, SHATALOV B. I. ET AL. 'REMOVAL OF CHLORINE AND CHLOROORGANIC IMPURITIES FROM HYDROGEN CHLORIDE' page 140 ;column R ;
- E.P. Barrett et al. J.Am.Chem.Soc.,Jan.vol.73 p373-380
- DD-A-157789 (Chem.Werke Buna VEB)

## Description

This invention relates to methods for purifying a hydrogen chloride fluid containing a hydrolysable organic silicon compound so that hydrogen chloride may be reused with an economic advantage.

Mainly because of their reactivity, hydrolysable organic silicon compounds, especially ester silanes and the like are currently increasing their use as intermediates for the manufacture of various commercial silicone products or additives to coating compositions and the like. In general, hydrolysable organic silicon compounds are prepared, for example, by esterifying chloro-silanes in case of ester silanes. This is a dehydrochlorination reaction which generates a great amount of hydrogen chloride containing a hydrolysable organic silicon compound. At present, the hydrogen chloride by-product together with an organic silicon compound is neutralized with caustic soda which is an industrially inexpensive alkali source.

From an economical aspect, however, it would be better if the hydrogen chloride by-product could be recovered for reuse. Although the recovery of the hydrogen chloride by-product for reuse is desirable, no recovery techniques thus far developed have been practically acceptable since the hydroly able organic silicon compound interferes with the recovery procedure.

More particularly, one currently available technique for separating a hydrolysable organic silicon compound from hydrogen chloride gas is by contacting a mixture of hydrogen chloride and hydrolysable organic silicon compound with water or dilute hydrochloric acid to hydrolyse the organic silicon compound to a gel-like solid which is discarded out of the system. Since the gel is sticky, its separation by conventional industrial solid-liquid separation means such as filtration is difficult.

Another known technique is to separate hydrolysable organic silicon compound from gas through adsorption. The adsorptive separation technique is applicable to any type of hydrolysable organic silicon compound. For inorganic silicon compounds such as chloro-silanes, this technique has been utilized in practice and is industrially acceptable, since it allows a number of repetitive adsorption/desorption steps and has a prolonged effective life even when the adsorbent used is activated carbon. Where hydrolysable organic silicon compounds are not co-present with hydrogen chloride, for example, where they are contained in a single gas such as nitrogen or hydrogen, an adsorption technique using an adsorbent as means for removing the silicon compounds is practically acceptable since the technique tolerates a number of repetitive adsorption/desorption steps and has a prolonged effective life.

Where hydrogen chloride is co-present with a hydrolysable organic silicon compound, however, the adsorption technique is unsuitable. The reason is that the hydrolysable organic silicon compound, in the co-presence of hydrogen chloride, has specific reactivity which deprives the adsorbent of its adsorptivity within a short time so that the adsorbent must be frequently exchanged for fresh adsorbent. It has therefore been economically unacceptable to purify hydrogen chloride containing a hydrolysable organic silicon compound (silane and siloxane) using the adsorptive technique.

DD-A-157789 discloses the purification of HCl gas, arising as a by-product in the manufacture of vinyl chloride from 1,2-dichloroethane, using activated carbon to remove any of acetylene, ethylene, vinyl chloride and dichlotoethane impurities. The active carbon adsorber is regenerated using inert gas e.g. N₂, at 150-250°C.

EP-A-58116 describes the use of NaOH or KOH for regeneration of caustic-impregnated activated carbon, in particular to remove accumulated organic contaminants.

Our object is to provide novel methods for purifying a hydrogen chloride fluid containing a hydrolysable organic silicon compound, particularly with the aim that the hydrogen chloride can be recovered for reuse in an economically advantageous manner.

The present invention provides a method for purifying a hydrogen chloride fluid containing a hydrolysable organic silicon compound by removing the silicon compound therefrom through adsorption using porous activated carbon having a pore diameter of 30 to 40 angstroms as determined by BJH method. Quite unexpectedly, porous activated carbon having such a pore diameter is found to be minimally subject to chemical adsorption of hydrolysable organic silicon compounds onto the activated carbon surface. The activated carbon is thus less subject to loss of adsorptivity by pore blocking and retains its physical adsorptivity over a long period of time. The hydrogen chloride fluid containing a hydrolysable organic silane compound can be efficiently purified by an adsorption technique using specific activated carbon which has an increased effective life and thus tolerates a more number of sequential adsorption steps.

The carbon is gradually deactivated as it is repeatedly subject to adsorption and desorption steps. Then the deactivated carbon is activated again by washing it with an alkaline or acidic aqueous solution. This washing permits the carbon to be activated to an adsorptivity level approximate to the initial adsorptivity available prior to the adsorption step, eliminating a need for frequent replacement of the adsorbent in the adsorption tower. Then, a hydrogen chloride fluid containing a hydrolysable organic silicon compound can be efficiently purified by an adsorption technique using activated carbon while the technique remains effective over a long period of time.

Some examples of the invention will be described with reference to the accompanying drawings, in which:

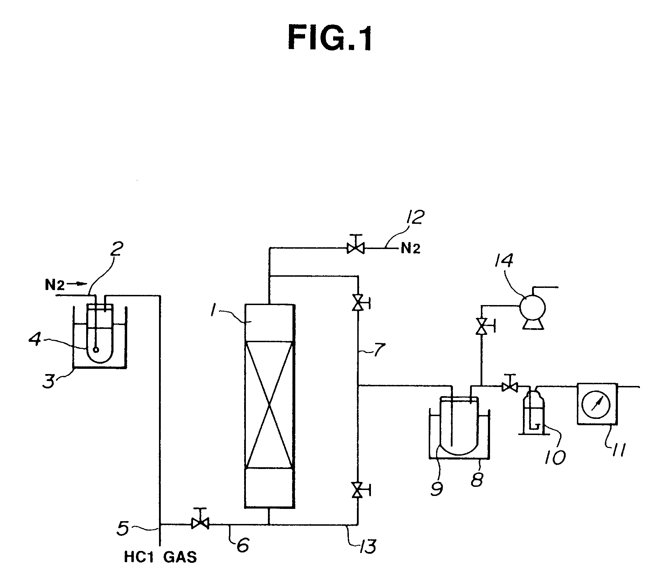

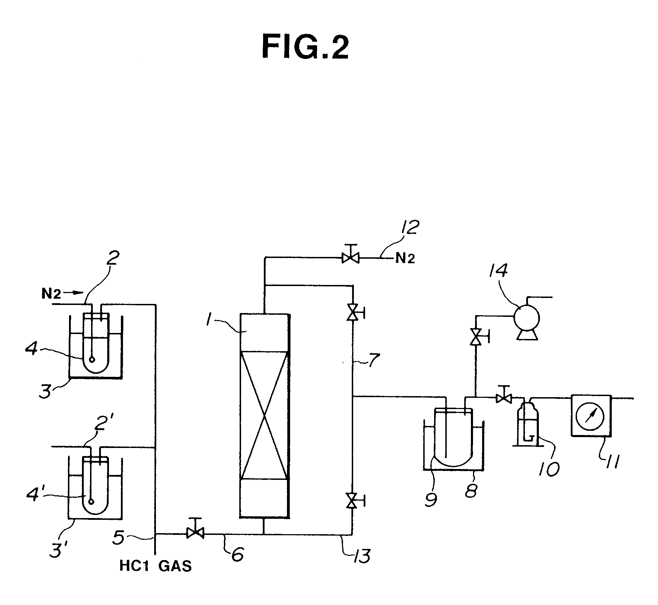

Figs. 1 and 2 schematically illustrate adsorption systems used in Examples of the present invention, respectively.

A hydrogen chloride fluid containing a hydrolysable organic silicon compound is purified by removing the hydrolysable organic silicon compound therefrom. The hydrolysable organic silicon compound may be a hydrolysable organic silane compound or a hydrolysable organic silicone compound, e.g. as represented by the general formula (1) or (2) as shown below. 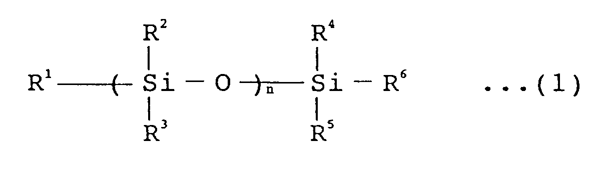
wherein R¹ to R⁶ independently represent a hydrolysable group or a substituted or unsubstituted monovalent hydrocarbon group having 1 to 10 carbon atoms and the letter n is an integer of 0 to 20 provided that at least one of R¹, R⁴, R⁵ and R⁶ is a hydrolysable group when n is 0 and at least one of R¹ to R⁶ is a hydrolysable group when n is an integer of 1 to 20. 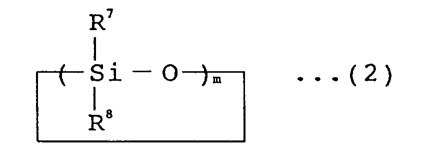
wherein R⁷ and R⁸ have the same meaning as R¹ to R⁶ and the letter m is an integer of 3 to 20, provided that at least one of R⁷ and R⁸ is a hydrolysable group.

Examples of the hydrolysable group include a hydrogen atom, a halogen atom, a hydroxyl group, an alkoxy group having 1 to 6 carbon atoms and an aryloxy group having 6 to 10 carbon atoms. Examples of the monovalent hydrocarbon group include an alkyl group such as methyl, ethyl and propyl, an alkenyl group such as vinyl and allyl, an aryl group such as phenyl, an aralkyl group such as benzyl, and a substituted one in which some or all of hydrogen atoms of the above groups are replaced by halogen atom, cyano group and the like such as trifluoropropyl and cyanoethyl.

More specifically, included in the hydrolysable organic silane compounds relevant herein are ester silanes and partially halogen-substituted ones thereof, for example, dimethoxysilane, trimethoxysilane, tetramethoxysilane, diethoxysilane, triethoxysilane, tetraethoxysilane, and modified ones of these compounds wherein alkoxy groups are halogen substituted. These compounds may be linear or cyclic, monomeric or polymeric. A hydrogen chloride by-product contains one or more hydrolysable organic silicon compounds.

The activated carbon used in the purification procedure or adsorptive disposal of organic silicon compounds is preferably re-activated by washing it with an alkaline or acidic aqueous solution. For effective adsorption of a hydrolysable organic silicon compound, a molded form of carbon is preferred because an adsorption tower can be fully packed therewith.

Hydrogen chloride gas containing a hydrolysable organic silane compound is purified by passing the gas through activated carbon, thereby removing the silane compound from the gas through adsorption. To this end it is recommended to use an adsorption tower or column.

More particularly, the adsorption tower is filled with an adsorbent in the form of activated carbon. Then a hydrogen chloride gas containing a hydrolysable organic silicon compound is passed through the carbon packing in the tower in one direction, thus allowing the activated carbon to adsorb the silicon compound. Immediately before the silicon compound begins to break through the carbon packing, the gas feed is interrupted, and the hydrolysable organic silicon compound is then desorbed or released from the activated carbon. Preferably for promoting desorption, a carrier gas is passed through the tower and thus through the carbon packing, typically in a reverse direction, most preferably under a vacuum of 5330 Pa (40 Torr)or lower and at a temperature of 100 to 200°C. The carrier gas used herein is preferably an inert gas, typically nitrogen gas because the silicon compound desorbed will otherwise react with the carrier gas, necessitating a difficult post-treatment. If a plurality of adsorption towers are arranged in parallel as done in conventional adsorption processes, the adsorption/desorption cycle can be continued without interruption.

As the adsorption/desorption process is repeated 10 to 80 rounds in accordance with the above procedure, the activated carbon gradually lowers its adsorptivity and eventually loses its ability. Then, according to a technique preferred herein, the carbon which has been deactivated by repetition of the adsorption/desorption steps is regenerated by washing the carbon with an alkaline or acidic aqueous solution. By washing, the carbon can be regenerated or activated to an active state very close to the initial activity before the first adsorption step.

The alkaline aqueous solution used as a washing solution for the deactivated carbon includes aqueous solutions of alkali metal hydroxides such as sodium hydroxide and potassium hydroxide, aqueous solutions of such alkali metal hydroxides in admixture with alcohols, aqueous ammonia, and aqueous solutions of alkaline organic compounds such as tetramethyl hydroxide. The alkaline aqueous solution should preferably has a concentration of about 10 to 30% by weight, especially about 20 to 30% by weight. Concentrations of less than 10% by weight would be less effective to provide regenerative action whereas concentrations of higher than 30% by weight would render the washing operation cumbersome.

In particular, the deactivated carbon is hydrophobic at the surface due to residues of the silicon compound. In order to help the washing solution wet the deactivated carbon surface for enhancing the regenerative effect, the use of a mixture of an alkaline aqueous solution and an alcohol is preferred. Such a mixture preferably contains alcohol and water in a volume ratio of from 1:3 to 1:1. Exemplary alcohols are methanol, ethanol and isopropyl alcohol.

The longer the dipping time, the higher activity the activated carbon regains after the washing treatment. The dipping time can be shorter by increasing the temperature and the concentration of a washing alkaline solution. Too high a temperature or washing solution concentration, however, may adversely affect the regenerative washing effect at the interface between the carbon surface and the liquid phase, thus resulting in the activated carbon having relatively lower activity at the end of washing treatment. It is thus desirable to carry out washing treatment at a temperature below the boiling point of an alkaline solution for about 3 to 24 hours, especially about 3 to 10 hours.

An alternative washing solution is an acidic aqueous solution, such as aqueous solutions of inorganic acids such as hydrofluoric acid and phosphoric acid and organic acids such as oxalic acid and citric acid. Acidic solutions having a higher concentration are advantageous since they tend to etch the silicon compound chemically adsorbed to the activated carbon surface and thus reduce the dipping time, but too high concentrations would undesirably attack the material of which the adsorption tower is made. Preferred acidic aqueous solutions have a concentration of about 1 to 10% by weight.

For the acidic aqueous solutions, the dipping time is generally about 3 to 10 hours. As in the case of alkaline solutions, the dipping time can be shorter by increasing the temperature of washing treatment. In practice, the washing treatment favors a dipping temperature below the boiling point of an acidic solution.

The deactivated carbon may be washed by admitting an alkaline or acidic aqueous solution into the adsorption tower filled with the deactivated carbon from one end until the deactivated carbon is fully dipped in the solution, keeping the deactivated carbon dipped in the solution for a sufficient time, and then emptying the tower of the solution from the bottom.

Alternatively, the deactivated carbon may be washed for regeneration with an alkaline or acidic aqueous solution by connecting an external tank of alkaline or acidic aqueous solution to the tower, and circulating the solution between the tower and the tank by means of a pump. This process insures effective solid-liquid contact and economical utilization of chemicals.

After the deactivated carbon has been washed for regeneration, the carbon is removed of the washing solution, and then washed with a weakly alkaline aqueous solution where the washing solution is acidic or a weakly acidic aqueous solution where the washing solution is alkaline, and finally with neutral water until the pH measurement becomes neutral. The weakly alkaline or acidic aqueous solution used in the post-washing gives rise to neutralization reaction with the strongly acidic or alkaline aqueous solution used in the surface treatment and thus can advantageously reduce the number of post-washings. Desirably, a proper choice is made such that neutralization may form a water-soluble salt, and the regenerated carbon is thoroughly washed with neutral water such that pores of the carbon may not be blocked with the salt resulting from neutralization.

After neutralization, the carbon is dried in vacuum to remove water from the carbon surface. More efficient vacuum drying is achieved by heating, typically at a temperature of 100 to 150°C.

By the washing and post-treatment, the activated carbon, which had been deactivated by the repetitive adsorption/desorption steps, is regenerated or activated again to a state approximate to the initial adsorptivity before the adsorption step. The activated carbon now regenerated by washing can tolerate tens of adsorption/desorption steps in a continuous manner as before.

Activated carbon having a pore diameter of 30 to 40 angstroms is used. With a pore diameter of less than 30 Å, hydrolysable organic silicon compounds can chemically adsorb to the activated carbon surface to block pores, substantially depriving the activated carbon of its adsorptivity. That is, the effective life is too short for commercial use. Pore diameters of more than 40 Å are not acceptable for practical adsorption of hydrolysable organic silicon compounds since the hydrolysable organic silicon compounds cannot physically adsorb to the activated carbon surface, but break through the activated carbon within a short time.

The washing of the deactivated carbon with an alkaline or acidic aqueous solution is not always needed, although it is recommended.

The use of the activated carbon having a pore diameter of 30 to 40 angstroms can repeat a series of steps of treating the hydrogen chloride fluid with activated carbon while repeating the adsorption/desorption operation over several to several tens of rounds and then regenerating the deactivated carbon (defined as one cycle in the present disclosure) for further rounds as shown in Table 1. Therefore, it can attain a longer effective life.

**Table 1**

| Pore diameter of activated carbon | Repetitive number of adsorption/desorption | Cycle number (repetitive number of regeneration) |
|---|---|---|
| less than 10 Å | 15 to 25 | 5 to 15 |
| 10 to < 30 Å | 25 to < 40 | 15 to < 20 |
| 30 to 40 Å | 40 to 60 | 20 to 40 |
| more than 40 Å | 20 to 30 | 15 to < 20 |

Hydrogen chloride purification methods proposed herein are effective for purifying a hydrogen chloride fluid containing a hydrolysable organic silicon compound at a low cost by using activated carbon for removing the silicon compound through an adsorption process which could not be applied in the prior art from an economic aspect since the adsorbent was immediately deactivated. Activated carbon having a pore diameter of 30 to 40 Å does not experience an immediate loss of adsorptivity, can tolerate a more number of repetitive adsorption steps and has a long effective life. The present proposals have additional economic advantages in that purified hydrogen chloride can be reused as a chlorine source and the alkali source which was vastly used in the prior art to neutralize hydrogen chloride containing a hydrolysable organic silicon compound can be saved. Another advantage is ease of overall operation and maintenance because the washing treatment for regeneration need not be taken at the end of every adsorption/desorption cycle.

### EXAMPLE

Examples of the present invention are given below in examples 5-7 by way of illustration and not by way of limitation.

Examples 1-4 show process features which are preferred, but do not form part of the invention according to claim 1.

### Example 1

A hydrogen chloride gas containing a hydrolysable organic silane compound was purified using an adsorption system as shown in FIG. 1.

First, an adsorption tower 1 was packed with 50 grams of activated carbon (Sirasagi Carbon (Trade Mark) commercially available from Takeda Pharmaceutical K.K.). The carbon had a specific (or internal) surface area of 1,091 m²/g as measured by a BET method of the multi-point type. The activated carbon packing was dried under vacuum at a temperature of 150°C for one hour.

Then a gas mixture consisting of a hydrolysable organic silane compound, hydrogen chloride, and nitrogen as shown in Table 2 was passed through the adsorption tower 1, allowing the adsorbent to adsorb the silane.

**Table 2**

| | |
|---|---|
| KBM-13* | 1.51 mol% |
| HCl | 49.78 mol% |
| N₂ | 48.71 mol% |

| | |
|---|---|
| *KBM-13 (Trade Mark) : the hydrolysable compound trimethoxysilane, commercially available from Shin-Etsu Chemical Co., Ltd. | |

More particularly, N₂ gas was fed from a nitrogen inlet line 2 and bubbled into the silane in a container 4 located at the center of a silane bubbler 3 while HCl gas was carried through a HCl line 5. These gases were mixed and the mixture was introduced into the tower 1 at the bottom through a line 6.

The gas that had passed the carbon packing was taken out of the tower 1 to an outlet line 7 connected to the tower top, then passed through a trap 9 in a dry ice/methanol coolant bath 8, a scrubbing bottle 10 filled with water, and a gas meter 11, and finally collected in an external container (not shown).

The initial packing had a break-through time of 3.17 hours. The break-through time was determined by connecting a gas chromatograph to a sampling port at the tower top, sampling the gas that had passed the carbon packing for gas chromatographic analysis, and measuring the time taken until a peak attributable to the hydrolysable organic silane compound was detected.

When the break-through of the hydrolysable organic silane compound was detected, the adsorption procedure was interrupted. Nitrogen gas was introduced into the adsorption tower 1 from a nitrogen inlet line 12 connected to the tower top at a temperature of 150°C and a vacuum of 2000 Pa (15 mmHg). The desorbing nitrogen gas was pumped to the exterior through another outlet line 13 and the trap 9 by means of a pump 14. Desorption was effected by passing N₂ gas at a rate of 0.3 N-liter/min. for 3 hours.

This adsorption/desorption procedure was repeated 24 cycles until a break-through time of 20 minutes was reached.

At this point, the carbon was regarded as deactivated. It was taken out of the tower 1 and found to have a specific surface area of 8 m²/g, measured by the same BET method as above.

The deactivated carbon was dipped in a 27% caustic soda aqueous solution at 80°C for 10 hours and then washed with pure water until the washing water became neutral. The carbon was then dried in a vacuum drier. The regenerated active carbon was measured to have a specific surface area of 1,035 m²/g.

After the regenerative treatment, the active carbon was again placed in the adsorption tower whereupon a gas mixture of the composition shown in Table 2 was passed through the tower. The break-through time was measured to be 2.58 hours.

### Examples 2-4

The procedure of Example 1 was repeated except that the caustic soda solution was replaced by a regenerative washing solution as shown in Table 3. The results are also shown in Table 3.

**Table 3**

| | Example | | | |
|---|---|---|---|---|
| | 1 | 2 | 3 | 4 |
| Regenerative aqueous solution | NaOH | NaOH + CH₃OH | HF | HF + HNO₃ |
| Concentration (wt%) | 27 | 13.5 | 5 | 5 |
| Dipping time (hour) | 10 | 5 | 5 | 10 |
| Dipping temperature (°C) | 80 | 40 | room temperature | room temperature |

| Break-through time (hour) | | | | |
|---|---|---|---|---|
| Initial | 3.17 | 3.31 | 3.05 | 3.19 |
| Deactivated | 0.33 | 0.41 | 0.29 | 0.30 |
| Regenerated | 2.58 | 2.63 | 2.54 | 2.63 |

| Specific surface area (m²/g) | | | | |
|---|---|---|---|---|
| Initial | 1091 | 1101 | 1098 | 1044 |
| Deactivated | 8 | 13 | 4 | 15 |
| Regenerated | 1035 | 1050 | 1042 | 1048 |
| Adsorption/desorption cycles | 24 | 30 | 28 | 27 |

As is evident from the break-through times and specific surface areas in Table 3, the once-deactivated carbon could be regenerated to a value sufficiently close to the initial value to reuse it in the purification of a hydrogen chloride gas containing a hydrolysable organic silane compound. Therefore, these methods embodying the invention can purify a hydrogen chloride gas containing a hydrolysable organic silane compound through adsorption in an inexpensive manner.

### Example 5

A hydrogen chloride gas containing a hydrolysable organic silane compound was purified using an adsorption system as shown in FIG. 2.

First, an adsorption tower 1 was packed with 50 grams of activated carbon. The carbon had a specific surface area of 1,243 m²/g as measured by a BET method of the multi-point type and a pore diameter of 33 to 36 Å as measured by a BJH method. The activated carbon packing was dried under vacuum at a temperature of 150°C for one hour.

Then a gas mixture consisting of a hydrolyzable organic silane compound, hydrogen chloride, and nitrogen as shown in Table 2 was passed through the adsorption tower 1, allowing the adsorbent to adsorb the silane. More particularly, N₂ gas was fed from a nitrogen inlet line 2 and bubbled into the silane in a container 4 located at the center of a silane bubbler 3. Additional N₂ gas was fed from another nitrogen inlet line 2' and bubbled into the methanol in a container 4' located at the center of a bubbler 3'. HCl gas was carried through a HCl line 5. These gases were mixed and the mixture was introduced into the tower 1 at the bottom through a line 6.

The gas that had passed the carbon packing was taken out of the tower 1 to an outlet line 7 connected to the tower top, then passed through a trap 9 in a dry ice/methanol coolant bath 8, a scrubbing bottle 10 filled with water, and a gas meter 11, and finally collected in an external container (not shown).

The initial packing had a break-through time of 3.67 hours. The break-through time was determined by connecting a gas chromatograph to a sampling port at the tower top, sampling the gas that had passed the carbon packing for gas chromatographic analysis, and measuring the time taken until a peak attributable to the hydrolysable organic silane compound was detected.

When the break-through of the hydrolysable organic silane compound was detected, the adsorption procedure was interrupted. Nitrogen gas was introduced into the adsorption tower 1 from a nitrogen inlet line 12 connected to the tower top at a temperature of 150°C and a vacuum of 2000 Pa (15 mmHg). The desorbing nitrogen gas was pumped by a pump 14 to the exterior through another outlet line 13 and the trap 9. Desorption was effected by passing N₂ gas at a rate of 0.3 N-liter/min. for 3 hours.

This adsorption/desorption procedure was repeated 5 rounds, with the break-through time at the end of each cycle being shown in Table 4. Then the activated carbon was taken out of the tower 1 and measured to have a specific surface area of 1,108 m²/g by the same BET method as above.

### Example 6 and Comparative Examples 1 - 2

The procedure of Example 5 was repeated except that the activated carbon was replaced as shown in Table 4. The results are also shown in Table 4.

**Table 4**

| | Example | | Comparative Example | |
|---|---|---|---|---|
| | 5 | 6 | 1 | 2 |
| | | | | |

| Activated carbon | | | | |
|---|---|---|---|---|
| Type | A | B | C | D |
| Pore diameter ( Å ) | 33 - 36 | 36 - 40 | 22 - 28 | 42 - 46 |

| Break-through time (hour) | | | | |
|---|---|---|---|---|
| 1st round | 3.67 | 3.88 | 3.43 | 3.17 |
| 2nd round | 3.25 | 3.53 | 2.90 | 2.77 |
| 3rd round | 3.25 | 3.47 | 2.72 | 2.65 |
| 4th round | 3.17 | 3.33 | 2.65 | 2.32 |
| 5th round | 3.08 | 3.15 | 2.48 | 2.22 |

| Specific surface area (m²/g) | | | | |
|---|---|---|---|---|
| Before use | 1243 | 992 | 1133 | 845 |
| After use | 1108 | 792 | 553 | 323 |

As is evident from the break-through time and specific surface area in Table 4, activated carbon having a pore diameter within the range of 30 to 40 Å provides a longer break-through time, ensuring effective separation of a hydrolysable organic silane compound from a hydrogen chloride gas containing the same. Therefore, the method can purify a hydrogen chloride gas containing a hydrolysable organic silicon compound through adsorption in an inexpensive manner.

### Example 7

A hydrogen chloride gas containing a hydrolysable organic silane compound was purified using an adsorption system as shown in FIG. 2.

First, an adsorption tower 1 was packed with 50 grams of activated carbon. The carbon had a pore diameter of 36 to 40 Å as measured by a BJH method. The activated carbon packing was dried under vacuum at a temperature of 150°C for one hour.

Then a gas mixture consisting of a hydrolysable organic silane compound, hydrogen chloride, and nitrogen as shown in Table 2 was passed through the adsorption tower 1, allowing the adsorbent to adsorb the silane. More particularly, N₂ gas was fed from a nitrogen inlet line 2 and bubbled into the silane in a container 4 located at the center of a silane bubbler 3. Additional N₂ gas was fed from another nitrogen inlet line 2' and bubbled into the methanol in a container 4' located at the center of a bubbler 3'. HCl gas was carried through a HCl line 5. These gases were mixed and the mixture was introduced into the tower 1 at the bottom through a line 6.

The gas that had passed the carbon packing was taken out of the tower 1 to an outlet line 7 connected to the tower top, then passed through a trap 9 in a dry ice/methanol coolant bath 8, a scrubbing bottle 10 filled with water, and a gas meter 11, and finally collected in an external container (not shown).

The initial packing had a break-through time as reported in Table 5. The break-through time was determined by connecting a gas chromatograph to a sampling port at the tower top, sampling the gas that had passed the carbon packing for gas chromatographic analysis, and measuring the time taken until a peak attributable to the hydrolyzable organic silane compound was detected.

When the break-through of the hydrolyzable organic silane compound was detected, the adsorption procedure was interrupted. Nitrogen gas was introduced into the adsorption tower 1 from a nitrogen inlet line 12 connected to the tower top at a temperature of 150°C and a vacuum of 4000 Pa (30 mmHg). The desorbing nitrogen gas was pumped by a pump 14 to the exterior through another outlet line 13 and the trap 9. Desorption was effected by passing N₂ gas at a rate of 0.4 N-liter/min. for 3 hours.

This adsorption/desorption procedure was initially repeated as many rounds as the carbon was deactivated and the carbon was then regenerated, completing a first cycle. The first cycle was followed by a series of similar cycles in each of which the adsorption/desorption procedure was repeated 15 rounds before the carbon was regenerated. The carbon regeneration procedure is described below.

First the activated carbon to be regenerated, that is, deactivated carbon was dipped in a 25 wt% sodium hydroxide aqueous solution at 80°C for 5 hours and then washed with pure water until neutral. Thereafter, nitrogen gas was admitted into tower 1 from the top through inlet line 12 and past the carbon packing, pumped by pump 14 to the exterior through outlet line 13. Drying nitrogen gas conditions included a temperature of 150°C, a vacuum of 4000 Pa (30 mmHg), a rate of 0.1 N-liter/min. and a time of 3 hours. This completed regeneration so that the carbon was ready for repetitive adsorption/desorption operations.

The cycle involving repetitive adsorption/desorption rounds and carbon regeneration was repeated until the carbon completely lost its activity or became non-regeneratable.

The same test as above was carried out using activated carbon batches having larger and smaller pore diameters.

Table 5 reports the number of adsorption/desorption rounds repeated in the first cycle until the carbon completely lost its activity, the number of successive cycles repeated until the carbon completely lost its activity, and the break-through time at the first round in each of the first to fifteenth cycles.

**Table 5**

| | Example | | |
|---|---|---|---|
| | 7 | Comparative | |
| Pore diameter ( Å ) | 36 - 40 | 22 - 28 | 42 - 46 |
| Number of adsorption/desorption rounds repeated in 1st cycle until deactivation | 43 | 38 | 27 |
| Number of cycles repeated until final deactivation | 25 | 18 | 18 |

| Break-through time at the first adsorption in each cycle (hour) | | | |
|---|---|---|---|
| 1st cycle | 3.86 | 3.65 | 3.19 |
| 2nd cycle | 3.86 | 3.58 | 2.63 |
| 3rd cycle | 3.88 | 3.62 | 2.65 |
| 4th cycle | 3.84 | 3.55 | 2.60 |
| 5th cycle | 3.80 | 3.53 | 2.57 |
| 6th cycle | 3.82 | 3.58 | 2.54 |
| 7th cycle | 3.82 | 3.52 | 2.58 |
| 8th cycle | 3.82 | 3.48 | 2.52 |
| 9th cycle | 3.75 | 3.45 | 2.41 |
| 10th cycle | 3.78 | 3.50 | 2.36 |
| 11th cycle | 3.75 | 3.42 | 2.32 |
| 12th cycle | 3.76 | 3.35 | 2.38 |
| 13th cycle | 3.75 | 3.27 | 2.30 |
| 14th cycle | 3.72 | 3.10 | 2.15 |
| 15th cycle | 3.70 | 3.07 | 2.20 |
| 16th cycle | 3.73 | 3.00 | 2.10 |

Although some preferred embodiments have been described, many modifications and variations may be made thereto in the light of the above teachings. It is therefore to be understood that within the scope of the appended claims, the invention may be practiced otherwise than as specifically described.

## Claims

1. A method of purifying a hydrogen chloride fluid containing a hydrolysable organic silicon compound, comprising removing the hydrolysable organic silicon compound by adsorption onto porous activated carbon having a pore diameter of 30 to 40 angstroms as determined by BJH method.

2. A method according to claim 1 in which the adsorbed silicon compound is periodically desorbed from the activated carbon, the activated carbon being gradually deactivated by repeated subjection to the steps of adsorption and desorption, and being activated again by washing with an alkaline or acidic aqueous solution.

3. A method according to claim 2 in which the aqueous solution is an alkaline solution of an alkali metal hydroxide.

4. A method according to claim 3 in which the alkaline solution contains also an alcohol.

5. A method according to claim 3 or claim 4 in which the deactivated carbon is washed with the alkaline solution at a temperature below the boiling point of the solution for a period of from 5 to 24 hours.

6. A method according to claim 2 in which the aqueous solution is an acidic solution of an inorganic or organic acid.

7. A method according to claim 6 in which the deactivated carbon is washed with the acidic solution at a temperature below the boiling point of the solution for a period of from 3 to 10 hours.

8. A method according to claim 1 which includes
(a) an adsorption step of passing the hydrogen chloride fluid containing a hydrolysable organic silicon compound through the activated carbon, for the carbon to adsorb the hydrolysable organic silicon compound;
(b) a desorption step of passing a carrier gas through the activated carbon for the carbon to release the hydrolysable organic silicon compound;
(c) repeating the adsorption and desorption steps until a break-through time for the silicon compound to break through the activated carbon reaches a predetermined unacceptable minimum level;
(d) washing the deactivated carbon with an alkaline or acidic aqueous solution to regenerate activity of the carbon, and
(e) repeating the foregoing steps (a) to (d).

9. A method according to any one of the preceding claims in which the hydrolysable organic silicon compound is an ester silane or partially halogen-substituted ester silane.

10. A method according to claim 9 in which the hydrolysable organic silicon compound is dimethoxysilane, trimethoxysilane, tetramethoxysilane, diethoxysilane, triethoxysilane or tetraethoxysilane, or any of these in which halogen is substituted for not all alkoxy groups.

11. A method according to any one of the preceding claims in which the porous activated carbon is provided as a packing in an adsorption tower.

12. A method according to any one of the preceding claims in which the hydrogen chloride fluid to be purified is hydrogen chloride gas by-product from the manufacture of ester silane by esterifying chlorosilane.

## Patentansprüche

1. Verfahren zur Reinigung eines Chlorwasserstoff-Fluids, das eine hydrolysierbare organische Siliziumverbindung enthält, umfassend die Entfernung der hydrolysierbaren organischen Siliziumverbindung durch Adsorption an poröser Aktivkohle mit einem nach dem BJH-Verfahren bestimmten Porendurchmesser von 30 bis 40 Ångström.

2. Verfahren nach Anspruch 1, worin die adsorbierte Siliziumverbindung periodisch von der Aktivkohle desorbiert wird, wobei die Aktivkohle durch wiederholtes Aussetzen an Adsorptions- und Desorptionsschritte allmählich deaktiviert wird, und durch Waschen mit einer alkalischen oder sauren wäßrigen Lösung wieder aktiviert wird.

3. Verfahren nach Anspruch 2, worin die wäßrige Lösung eine alkalische Lösung eines Alkalimetallhydroxids ist.

4. Verfahren nach Anspruch 3, worin die alkalische Lösung auch einen Alkohol enthält.

5. Verfahren nach Anspruch 3 oder 4, worin die deaktivierte Kohle mit der alkalischen Lösung bei einer Temperatur unterhalb des Siedepunkts der Lösung über einen Zeitraum von 5 bis 24 Stunden gewaschen wird.

6. Verfahren nach Anspruch 2, worin die wäßrige Lösung eine saure Lösung einer anorganischen oder organischen Säure ist.

7. Verfahren nach Anspruch 6, worin die deaktivierte Kohle mit der sauren Lösung bei einer Temperatur unterhalb des Siedepunkts der Lösung über einen Zeitraum von 3 bis 10 Stunden gewaschen wird.

8. Verfahren nach Anspruch 1, das folgendes umfaßt:
(a) einen Adsorptionsschritt des Hindurchschickens des Chlorwasserstoff-Fluids, das eine hydrolysierbare organische Siliziumverbindung enthält, durch die Aktivkohle, sodaß die Kohle die hydrolysierbare organische Siliziumverbindung adsorbiert;
(b) einen Desorptionsschritt des Hindurchschickens eines Trägergases durch die Aktivkohle, sodaß die Kohle die hydrolysierbare organische Siliziumverbindung freisetzt;
(c) das Wiederholen der Adsorptions- und Desorptionsschritte, bis eine Durchbruchzeit, in der die Siliziumverbindung durch die Aktivkohle durchbricht, einen vorbestimmten unannehmbaren Mindestwert erreicht;
(d) das Waschen der deaktivierten Kohle mit einer alkalischen oder sauren wäßrigen Lösung, um die Aktivität der Kohle zu regenerieren, und
(e) das Wiederholen der obigen Schritte (a) bis (d).

9. Verfahren nach einem der vorhergehenden Ansprüche, worin die hydrolysierbare organische Siliziumverbindung ein Estersilan oder ein teilweise halogensubstituiertes Estersilan ist.

10. Verfahren nach Anspruch 9, worin die hydrolysierbare organische Siliziumverbindung Dimethoxysilan, Trimethoxysilan, Tetramethoxysilan, Diethoxysilan, Triethoxysilan oder Tetraethoxysilan oder eine beliebige dieser Substanzen ist, worin nicht alle Alkoxygruppen durch Halogen substituiert sind.

11. Verfahren nach einem der vorhergehenden Ansprüche, worin die poröse Aktivkohle als Packung in einem Adsorptionsturm bereitgestellt wird.

12. Verfahren nach einem der vorhergehenden Ansprüche, worin das zu reinigende Chlorwasserstoff-Fluid ein bei der Herstellung von Estersilan durch Verestern von Chlorsilan entstehendes Chlorwasserstoffgas-Nebenprodukt ist.

## Revendications

1. Méthode de purification d'un fluide de chlorure d'hydrogène contenant un composé de silicium organique hydrolysable, comprenant l'élimination du composé de silicium organique hydrolysable par adsorption sur du charbon activé poreux ayant un diamètre de pore de 30 à 40 angströms, comme déterminé par une méthode BJH.

2. Méthode selon la revendication 1, dans laquelle le composé de silicium adsorbé est périodiquement désorbé du charbon activé, le charbon activé étant graduellement désactivé par soumission répétée aux étapes d'adsorption et de désorption, et étant activé à nouveau par lavage avec une solution aqueuse alcaline ou acide.

3. Méthode selon la revendication 2, dans laquelle la solution aqueuse est une solution alcaline d'un hydroxyde de métal alcali.

4. Méthode selon la revendication 3, dans laquelle la solution alcaline contient également un alcool.

5. Méthode selon la revendication 3 ou la revendication 4, dans laquelle le charbon désactivé est lavé avec la solution alcaline à une température en dessous du point d'ébullition de la solution pendant une période de 5 à 24 heures.

6. Méthode selon la revendication 2, dans laquelle la solution aqueuse est une solution acide d'un acide inorganique ou organique.

7. Méthode selon la revendication 6, dans laquelle le charbon désactivé est lavé avec la solution acide à une température en dessous du point d'ébullition de la solution pendant une période de 3 à 10 heures.

8. Méthode selon la revendication 1 qui inclut
(a) une étape d'adsorption de passage du fluide de chlorure d'hydrogène contenant un composé de silicium organique hydrolysable à travers le charbon activé, pour que le charbon adsorbe le composé de silicium organique hydrolysable;
(b) une étape de désorption de passage d'un gaz porteur à travers le charbon activé pour que le charbon libère le composé de silicium organique hydrolysable;
(c) la répétition des étapes d'adsorption et de désorption jusqu'à ce qu'un temps de passage pour que le composé de silicium se fraie un passage à travers le charbon activé atteigne un niveau minimum prédéterminé inacceptable,
(d) lavage du charbon désactivé avec une solution aqueuse alcaline ou acide pour régénérer l'activité du charbon, et
(e) répétition des étapes précédentes (a) à (d).

9. Méthode selon l'une quelconque des revendications précédentes, dans laquelle le composé de silicium organique hydrolysable est un silane ester ou un silane ester substitué partiellement par un halogène.

10. Méthode selon la revendication 9, dans laquelle le composé de silicium organique hydrolysable est du diméthoxysilane, du triméthoxysilane, du tétraméthoxysilane, du diéthoxysilane, du triéthoxysilane ou du tétrahydroxysilane, ou de l'un de ceux-ci dans lequel l'halogène n'est pas substitué à tous les groupes alcoxy.

11. Méthode selon l'une quelconque des revendications précédentes, dans laquelle le charbon activé poreux est fourni sous forme d'un remplissage dans une tour d'adsorption.

12. Méthode selon l'une quelconque des revendications précédentes, dans laquelle le fluide de chlorure d'hydrogène à purifier est un produit secondaire de gaz de chlorure d'hydrogène provenant de la fabrication d'un silane ester par estérification de chlorosilane.
